# EUROPEAN PATENT APPLICATION

(11) **EP 4 819 352 A1**
(43) Date of publication of application: **07.10.2026**
(21) Application number: 24897141.8
(22) Date of filing: 21.10.2024
(51) Int. Cl.: H01M 50/474, H01G 11/80, H01M 50/103, H01M 50/184, H01M 50/414, H01M 50/417, H01M 50/434, H01M 50/451, H01M 50/477, H01M 50/489

(54) **ELECTRIC POWER STORAGE MODULE**

(30) Priority: 30.11.2023 JP 2023203170
(71) Applicant: KABUSHIKI KAISHA TOYOTA JIDOSHOKKI, Kariya-shi, Aichi 448-8671 (JP)
(72) Inventor: KODAMA Ryosuke, Kariya-shi, Aichi 448-8671 (JP); SAKAMOTO Shunya, Kariya-shi, Aichi 448-8671 (JP)
(74) Representative: TBK
(86) International application number: PCT/JP2024/037416
(87) International publication number: WO 2025/115451

(57) **Abstract**

An electric power storage module (1) comprises an electrode laminate (10), a sealing body (20) for sealing the electrode laminate (10), and a separator (14) interposed between adjacent electrodes. A spacer (22) of the sealing body (20) includes: a body part (22M) formed in a frame shape following the external contour of a collector (15) of the electrodes; and a communication hole formation section (22) in which a portion of the spacer (22) from an outer edge (22t) thereof to an inner edge (22e) thereof is omitted, whereby a communication hole (30) is formed. The separator (14) extends so as to be sandwiched between the spacer (22) and adjacent sealing materials (21) in the sealing body (20) while being interposed between a positive-electrode active material layer (16) and a negative-electrode active material layer (17) that are adjacent to each other. The separator (14) includes a base material (14a) and a ceramic layer (14b) formed on the base material (14a) at least in a portion overlapping the communication hole formation section (22F).

## Description

### TECHNICAL FIELD

The present disclosure relates to a power storage module.

### BACKGROUND ART

A bipolar battery is disclosed in Patent Document 1. This bipolar battery includes: a bipolar electrode in which a positive electrode active material layer is provided on one surface of a current collector and a negative electrode active material layer is provided on the other surface of the current collector; a gel electrolyte disposed between the positive electrode active material layer and the negative electrode active material layer; and a sealing layer that surrounds a periphery of a unit cell formed of the positive electrode active material layer, the negative electrode active material layer, and the gel electrolyte and is provided between the current collectors. The bipolar battery has a structure in which a plurality of such unit cells is stacked.

### CITATION LIST

### Patent Document

[Patent Document 1] Japanese Patent Application Publication No. 2004-158343

### SUMMARY OF THE INVENTION

### Technical Problem

In a power storage module such as the bipolar battery described in Patent Document 1, a separator may be interposed between a positive electrode active material layer and a negative electrode active material layer disposed adjacent to each other. In particular, by extending the separator from between the positive electrode active material layer and the negative electrode active material layer to a sealing layer, the internal space formed between adjacent current collectors can be partitioned into a positive electrode-side space on the positive electrode active material layer side space and a negative electrode-side space on the negative electrode active material layer side. In this case, for example, if foreign matter is present in the negative electrode-side space and such foreign matter penetrates the separator, short circuits may occur between non-coated portions of the current collectors, in which no active material layer is formed, adjacent to each other with the separator interposed therebetween. Although various types of foreign matter may be assumed, it is considered that one example is precipitate that is generated when metallic foreign substances dissolved by an electrolytic solution in the positive electrode-side space are reprecipitated in the negative electrode-side space.

The present invention is directed to providing a power storage module that can suppress short circuits.

### Solution to Problem

A power storage module according to the present invention includes: an electrode stack including a plurality of electrodes stacked along a first direction; a sealing body provided in the electrode stack and sealing the electrode stack; and a separator interposed between the electrodes adjacent to each other along the first direction, wherein the electrodes each includes: a current collector having a first surface intersecting with the first direction, and a second surface opposite from the first surface; a first active material layer provided on the first surface; and a second active material layer provided on the second surface and having a polarity different from a polarity of the first active material layer, the sealing body includes: a plurality of sealing materials that is stacked along the first direction, each of the sealing materials having a frame shape extending along an outer shape of the current collector, being joined to the first surface and the second surface at an peripheral edge of the current collector; a plurality of spacers that is interposed between the sealing materials adjacent to each other along the first direction, the spacers cooperating with the sealing materials adjacent to each other along the first direction to form internal spaces configured to accommodate an electrolytic solution between the current collectors adjacent to each other; and a plurality of communication holes providing communication between a plurality of internal spaces and an outside, and an outer edge of the second active material layer is positioned outward with respect to an outer edge of the first active material layer as viewed in the first direction, the spacers each have: a main body portion having a frame shape that extends along an outer shape of the current collector as viewed in the first direction; and a communication hole forming portion that is cut out from an outer edge to an inner edge of each of the spacers as viewed in the first direction to form the communication holes, an inner edge of the main body portion is located inward with respect to the outer edge of the second active material layer as viewed in the first direction, the separator is interposed between the first active material layer and the second active material layer adjacent to each other along the first direction, and extends so as to be sandwiched between a corresponding one of the sealing materials and a corresponding one of the spacers adjacent to each other along the first direction, and the separator includes a substrate and a ceramic layer formed on the substrate at least in a portion of the separator that overlaps with the communication hole forming portion as viewed in the first direction.

In this power storage module, the sealing body is provided in the electrode stack, so that the internal spaces configured to accommodate an electrolyte are formed between the current collectors of the electrodes adjacent to each other. In addition, the separator is interposed between the first active material layer and the second active material layer of the electrodes adjacent to each other. More specifically, the separator is interposed between the first active material layer and the second active material layer, and extends so as to be sandwiched between a corresponding one of the sealing materials that forms the sealing body and a corresponding one of the spacers adjacent to the corresponding one of the sealing materials. Accordingly, the separator may divide a corresponding one of the internal spaces into a first space on the first active material layer side and a second space on the second active material layer side.

On the other hand, in the power storage module, the spacers each have a main body portion having a frame shape that extends along an outer shape of the current collector as viewed in a stacking direction (first direction), and the inner edge of the main body portion is located inward with respect to the outer edge of the second active material layer, which protrudes outward with respect to the first active material layer. In other words, the main body portion of each of the spacers extends from between the sealing materials adjacent to each other so as to overlap with the second active material layer. Accordingly, between the uncoated portions of the current collectors adjacent to each other with the separator interposed therebetween, the main body portion of the spacers, in addition to the separator, is interposed as viewed in the stacking direction, so that short circuits caused by foreign matter existing in the second space of the internal spaces are suppressed, for example.

Here, the spacers have the communication hole forming portions where the spacers are cut out from the outer edges to the inner edges of the spacers as viewed in the stacking direction to form the communication holes, in addition to the main body portions. The communication hole allows the internal spaces to be in communication with an outside, thereby allowing an electrolytic solution and test gas to be introduced and discharged into and from the internal spaces. Since the communication hole forming portions are provided in the spacers, regions where no spacer is present can be created between the uncoated portions where no active material layer is formed in the current collectors adjacent each other with its corresponding one of the separator interposed therebetween. Therefore, in these regions, the spacers are less likely to contribute to prevention of short circuits between the uncoated portions, which are caused by foreign matter.

In this regard, in the power storage module, the separator includes the substrate and the ceramic layer formed on the substrate at least in the portion that overlaps with the communication hole forming portion (i.e., a portion where the spacer is cut out) as viewed in the stacking direction, and rigidity is secured as compared to a case where only the substrate is used. Therefore, even in the above-mentioned region where no spacer is interposed, foreign matter is prevented from penetrating the separator, and as a result, short circuits between the uncoated portions of current collectors adjacent to each other are prevented. As described above, this power storage module can suppress short circuits.

Here, the separator is sandwiched between its corresponding one of the sealing materials provided on the current collector and a corresponding one of the spacers stacked on the sealing material. Therefore, for example, when the sealing materials and the spacers are welded, heat input to the sealing materials is conducted through the current collectors and is thus not easily transmitted to the separator, whereas heat input to the spacers is easily transmitted to the separator, which may cause deterioration of the separator.

In this regard, in the power storage module according to the present invention, the ceramic layer may be formed on a side of the substrate adjacent to the spacer, of the sealing material and the spacer that sandwich the separator therebetween. In this case, in the separator, the ceramic layer is formed on a side of the substrate adjacent to the spacer, of the sealing material and the spacer that sandwich the separator therebetween. As a result, it becomes difficult for the heat input to the spacers to be transmitted to the substrate, thereby suppressing deterioration of the separator. With this configuration, even in a case where the separator and the spacers slide against each other when the spacers expand and contract due to heat generated during charging and discharging, for example, the ceramic layer suppresses wear (or damage) of the separator.

In the power storage module according to the present invention, the ceramic layer may have a thickness of 2 µm or more. In this case, it is possible to more reliably prevent short circuits.

In the power storage module according to the present invention, the electrolytic solution may contain LiFSI as an electrolytic salt. In this way, an electrolytic solution containing LiFSI (lithium bisfluorosulfonylimide) is likely to dissolve metallic foreign matter in the positive electrode-side space, out of the positive electrode-side space and the negative electrode-side space, so that it is likely to produce precipitate in the negative electrode-side space, out of the positive electrode-side space and the negative electrode-side space. Therefore, it is more effective to suppress short circuits as described above.

In the power storage module according to the present invention, a reinforcing portion is provided in one of the current collectors corresponding to a terminal electrode that is one of the electrodes located at an outermost position of the electrode stack in the first direction, and the reinforcing portion may be provided at least in the portion of the current collector of the terminal electrode between the outer edge of the first active material layer and the inner edge of the sealing material when viewed from the first direction. In this case, the reinforcing portion is formed at least in the uncoated portion of the current collector of the terminal electrode, thereby ensuring rigidity. As a result, for example, when the internal space is decompressed, the current collector of the terminal electrode is prevented from bending inward in the stacking direction and reducing a distance between the current collector and another current collector (i.e., the distance between the current collectors is maintained). As a result, short circuits between the current collectors are more reliably prevented, and fluid flow passages in the internal space are reliably ensured.

### Advantageous Effects of Invention

According to the present invention, it is possible to provide a power storage module that can suppress short circuits.

### BRIEF DESCRIPTION OF DRAWINGS

[FIG. 1] FIG. 1 is a schematic cross-sectional view, illustrating a power storage module according to a present embodiment.
[FIG. 2] FIG. 2 is a schematic plan view of the power storage module illustrated in FIG. 1.
[FIG. 3] FIG. 3 is a partially enlarged schematic cross-sectional view of the power storage module illustrated in FIG. 1.
[FIG. 4] FIG. 4 is a plan view of a spacer illustrated in FIGS. 1 and 3.
[FIG. 5] FIG. 5 is a partially enlarged schematic cross-sectional view illustrating the power storage module.
[FIG. 6] FIG. 6 is a schematic cross-sectional view, illustrating a power storage module according to a modified example.

### DESCRIPTION OF EMBODIMENTS

Hereinafter, a power storage module according to an embodiment will be described with reference to the drawings. In the description of the drawings, the same reference signs are used for the same or equivalent parts, and the repeated descriptions may be omitted. It is noted that a Cartesian coordinate system that defines an X direction, a Y direction perpendicular to the X direction, and a Z direction perpendicular to the X direction and the Y direction may be shown in the illustrations.

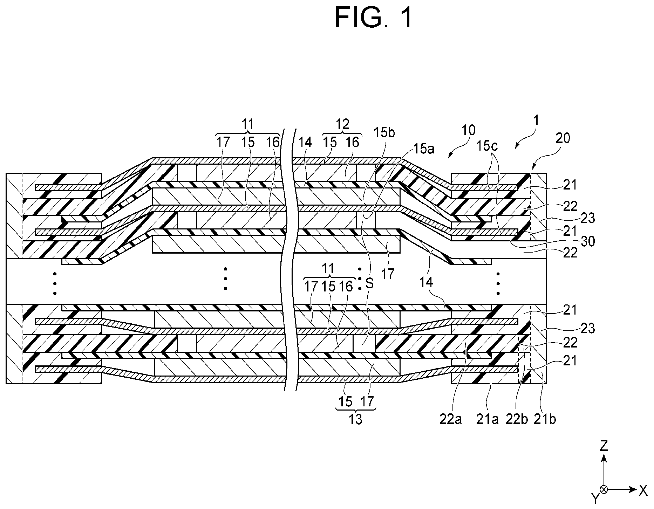

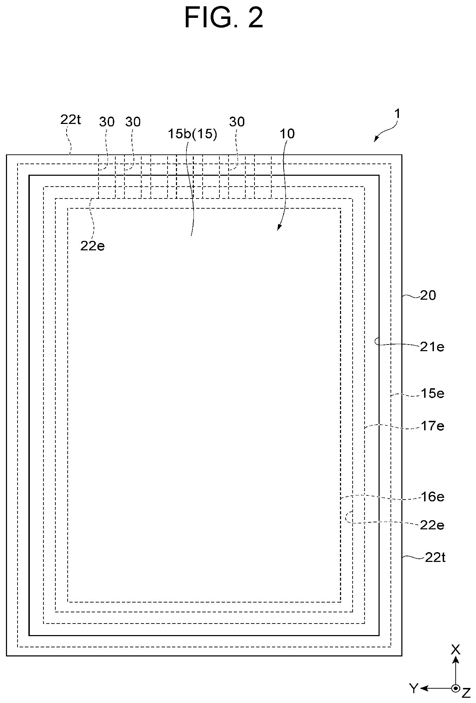

FIG. 1 is a schematic cross-sectional view of a power storage module according to the present embodiment. FIG. 2 is a schematic plan view of the power storage module illustrated in FIG. 1. A power storage module 1 illustrated in FIGS. 1 and 2 is a power storage module used for, for example, a battery of various vehicles such as a forklift truck, a hybrid vehicle, and an electric vehicle. The power storage module 1 is, for example, a secondary battery such as a nickel-metal hydride secondary battery or a lithium-ion secondary battery. The power storage module 1 may be an electric double layer capacitor, or an all-solid-state battery. Here, an example of a case where the power storage module 1 is a lithium-ion secondary battery will be described.

The power storage module 1 includes an electrode stack 10 and a sealing body 20. The electrode stack 10 includes a plurality of electrodes stacked along the Z direction (first direction). The plurality of electrodes includes a plurality of bipolar electrodes 11, a positive terminal electrode 12, and a negative terminal electrode 13. A separator 14 is interposed between adjacent two of the electrodes along the Z direction.

The bipolar electrodes 11 each include a current collector 15, a positive electrode active material layer 16 (first active material layer), and a negative electrode active material layer 17 (second active material layer). The current collector 15 has, for example, a rectangular sheet shape. The current collector 15 includes a first surface 15a and a second surface 15b. The first surface 15a is a surface that intersects with the Z direction, and the second surface 15b is a surface that intersects with the Z direction and is opposite from the first surface 15a. That is, the first surface 15a is a surface facing one side in the Z direction (a direction from the positive terminal electrode 12 to the negative terminal electrode 13 in FIG. 1), and the second surface 15b of the current collector 15 is a surface facing the other side in the Z direction (a direction from the negative terminal electrode 13 to the positive terminal electrode 12 in FIG. 1).

The positive electrode active material layer 16 is provided on the first surface 15a of the current collector 15. The negative electrode active material layer 17 is provided on the second surface 15b of the current collector 15. The plurality of bipolar electrodes 11 is stacked so that the positive electrode active material layer 16 of one of the bipolar electrodes 11 faces the negative electrode active material layer 17 of another one of the bipolar electrodes 11. The positive electrode active material layer 16 and the negative electrode active material layer 17 may have a groove.

The positive electrode active material layer 16 and the negative electrode active material layer 17 each have a rectangular shape as viewed in the Z direction. The negative electrode active material layer 17 is slightly larger than the positive electrode active material layer 16 as viewed in the Z direction. That is, in a plan view as viewed in the Z direction, an entire region where the positive electrode active material layer 16 is provided is located within a region where the negative electrode active material layer 17 is provided. In other words, as viewed in the Z direction, an outer edge 17e of the negative electrode active material layer 17 is located outward with respect to an outer edge 16e of the positive electrode active material layer 16.

The positive terminal electrode 12 (terminal electrode) has the current collector 15, and the positive electrode active material layer 16 provided on the first surface 15a of the current collector 15. The positive terminal electrode 12 does not have the positive electrode active material layer 16 or the negative electrode active material layer 17 on the second surface 15b of the current collector 15. That is, no active material layer is provided on the second surface 15b of the current collector 15 of the positive terminal electrode 12. The positive terminal electrode 12 is located at an outermost part of the electrode stack 10 in the Z direction, and is stacked on the bipolar electrodes 11. The positive terminal electrode 12 is stacked on the bipolar electrodes 11 so that the positive electrode active material layer 16 of the positive terminal electrode 12 faces the negative electrode active material layer 17 of one of the bipolar electrodes 11.

The negative terminal electrode 13 (terminal electrode) has the current collector 15, and the negative electrode active material layer 17 provided on the second surface 15b of the current collector 15. The negative terminal electrode 13 does not have the positive electrode active material layer 16 or the negative electrode active material layer 17 on the first surface 15a of the current collector 15. That is, no active material layer is provided on the first surface 15a of the current collector 15 of the negative terminal electrode 13. The negative terminal electrode 13 is located at the outermost part of the electrode stack 10 on an opposite side thereof in the Z direction (negative Z direction), and is stacked on the bipolar electrodes 11. The negative terminal electrode 13 is stacked on the bipolar electrodes 11 so that the negative electrode active material layer 17 of the negative terminal electrode 13 faces the positive electrode active material layer 16 of one of the bipolar electrodes 11.

In the present embodiment, the current collectors of the bipolar electrodes 11, the positive terminal electrode 12, and the negative terminal electrode 13 are referred to as the current collector 15 and denoted by the same reference numeral, but the current collectors of the bipolar electrodes 11, the positive terminal electrode 12, and the negative terminal electrode 13 may be the same or different from each other. Furthermore, a surface of the positive terminal electrode 12 on which the positive electrode active material layer 16 is not provided and a surface of the negative terminal electrode 13 on which the negative electrode active material layer 17 is not provided are in contact with, for example, a tab for extracting current, and therefore do not come into contact with the electrolytic solution.

The separators 14 are disposed between the bipolar electrodes 11 adjacent to each other, between the positive terminal electrode 12 and one of the bipolar electrodes 11, and between the negative terminal electrode 13 and one of the bipolar electrodes 11, respectively. The separators 14 each are interposed between the positive electrode active material layer 16 and the negative electrode active material layer 17 and extend to reach the sealing body 20. The separators 14 each are a part that allows charge carriers such as lithium ions to pass through, and prevents short circuits due to contact between the electrodes adjacent to each other by isolating the positive electrode active material layer 16 and the negative electrode active material layer 17.

The current collector 15 is a chemically inert electrical conductor for continuously conducting current to the positive electrode active material layer 16 and the negative electrode active material layer 17 during discharging or charging of the lithium-ion secondary battery. Examples of the materials used for the current collector 15 include a metal material, a conductive resin material, and a conductive inorganic material. Examples of the conductive resin material include a resin, or the like, in which a conductive filler is added to a conductive polymer material or a non-conductive polymer material, as necessary. The current collector 15 may include multiple layers. In this case, each layer of the current collector 15 may contain the above-mentioned metal material and/or conductive resin material.

A coating layer may be formed on a surface of the current collector 15. The coating layer may be formed by a known method such as plating or spray coating. The current collector 15 may have, for example, a plate shape, a foil shape (e.g., a metal foil), a film shape, or a mesh shape. Examples of the metal foil include an aluminum foil, a copper foil, a nickel foil, a titanium foil, and a stainless steel foil. The current collector 15 may be an alloy foil of the above metals or a foil in which a plurality of metal foils are integrated together. When the current collector 15 has a foil shape, a thickness of the current collector 15 may be, for example, 1 µm to 200 µm. In the present embodiment, the current collector 15 is a foil in which an aluminum foil and a copper foil are integrated together, or a foil in which copper is vapor-deposited on an aluminum foil.

The positive electrode active material layer 16 contains a positive electrode active material that is capable of absorbing and releasing charge carriers such as lithium ions. Examples of the positive electrode active material include a lithium composite metal oxide having a layered rock salt structure, a metal oxide having a spinel structure, and a polyanion compound. Any material that can be used in a lithium-ion secondary battery may be used as the positive electrode active material. The positive electrode active material layer 16 may contain a plurality of positive electrode active materials. In the present embodiment, the positive electrode active material layer 16 contains olivine type lithium iron phosphate (LiFePO₄) as a complex oxide.

The negative electrode active material layer 17 contains a negative electrode active material that is capable of absorbing and releasing charge carriers such as lithium ions. The negative electrode active material may be any of a simple substance, an alloy, or a compound. Examples of the negative electrode active material include lithium, carbon, and a metal compound. The negative electrode active material may be an element capable of being alloyed with lithium or a compound thereof. Examples of the carbon include natural graphite, artificial graphite, hard carbon (non-graphitizing carbon), and soft carbon (graphitizing carbon). Examples of the artificial graphite include highly oriented graphite and mesocarbon microbeads. Examples of the element capable of being alloyed with lithium include silicon and tin. In the present embodiment, the negative electrode active material layer 17 contains graphite as a carbon-based material.

Each of the positive electrode active material layer 16 and the negative electrode active material layer 17 (hereinafter simply referred to as "active material layer" in some case) may further contain a conductive assistant to enhance electrical conductivity, a binder, an electrolyte (polymer matrix, ion-conductive polymer, electrolytic solution, or the like), and an electrolyte supporting salt (lithium salt) to enhance ion conductivity, or the like as necessary. The conductive assistant is added to enhance electrical conductivity of the electrodes (the bipolar electrodes 11, the positive terminal electrode 12, the negative terminal electrode 13). The conductive assistant is, for example, acetylene black, carbon nanotubes (CNT), carbon black, graphite, or the like.

Examples of the binder include fluorine-containing resins, such as polyvinylidene fluoride, polytetrafluoroethylene, and fluororubber; thermoplastic resins, such as polypropylene and polyethylene; imide resins, such as polyimide and polyamide-imide; alkoxysilyl group-containing resins; acryl resins, such as acrylic acid and methacrylic acid; styrene-butadiene rubber (SBR); carboxymethyl cellulose; alginates, such as sodium alginate and ammonium alginate; watersoluble cellulose ester crosslinked materials; and starch-acrylic acid graft polymers. One of these binders may be used alone, or a plurality thereof may be used in combination. As the solvent of the binder, for example, water, N-methyl-2-pyrrolidone (NMP), and the like, may be used.

The separators 14 each may be a porous sheet or non-woven fabric that includes polymers for absorbing and holding an electrolyte, for example. Examples of the materials used for the separators 14 include polypropylene, polyethylene, polyolefin, and polyester. The separators 14 each may have a single-layer structure or a multilayer structure. The multilayer structure may include, for example, an adhesive layer, a ceramic layer as a heat resistant layer, or the like. The separators 14 each may be impregnated with an electrolyte. The electrolyte with which the separators 14 is impregnated is a liquid electrolyte (electrolytic solution) containing a non-aqueous solvent and an electrolytic salt dissolved in the non-aqueous solvent.

As the electrolytic salt for the electrolytic solution, a known lithium salt, such as LiClO₄, LiAsF₆, LiPF₆, LiBF₄, LiCF₃SO₃, LiN(FSO₂)₂, LiN(CF₃SO₂)₂, or the like, may be used. That is, the electrolytic solution may contain LiFSI (lithium bisfluorosulfonylimide) as an electrolytic salt. In this case, an example of the electrolytic solution is as follows.

### [Electrolytic solution]

Lithium salt: LiFSI 1.6 (mol/L)
Non-aqueous solvent: EC (ethylene carbonate) 15 (volume%)
MP (methyl propionate) 85 (volume%)

In addition, as the non-aqueous solvent, a known solvent such as cyclic carbonates, cyclic esters, chain carbonates, chain esters, ethers, or the like, may be used. It is noted that two or more of these known solvent materials may be used in combination.

The sealing body 20 is provided in the electrode stack 10 so as to surround the electrode stack 10 as viewed in the Z direction, and is formed in a rectangular tubular shape on a periphery of the electrode stack 10. The sealing body 20 may be joined (welded) to each of the first surface 15a and the second surface 15b of the current collector 15 on a peripheral portion 15c of each of the current collectors 15. The sealing body 20 forms internal spaces S between the current collectors 15 adjacent to each other in the Z direction, and is provided for sealing the respective internal spaces S (i.e., electrode stack 10). The internal spaces S each accommodate an electrolyte (e.g., electrolytic solution). The sealing body 20 can prevent the electrolytic solution contained in the internal spaces S from outflowing. Furthermore, the sealing body 20 can prevent air, moisture, and the like from entering the internal spaces S from an outside of the electrode stack 10 to.

The sealing body 20 includes an insulating material. Examples of materials for the sealing body 20 include various resin materials such as polypropylene, polyethylene, polystyrene, ABS resin, acid-modified polypropylene, acid-modified polyethylene, and acrylonitrile-styrene resin.

The sealing body 20 includes a plurality of sealing materials 21 made of a resin, and a plurality of spacers 22 made of a resin. The sealing materials 21 are provided for the current collectors 15, respectively. Therefore, the sealing materials 21 are stacked along the Z direction. Each of the sealing materials 21 has a frame shape (a rectangular frame shape in the present embodiment) extending along an outer shape of its corresponding one of the current collectors 15 on the peripheral portion 15c thereof as viewed in the Z direction. Each of the sealing materials 21 is provided so as to extend from the first surface 15a, across an end surface, to the second surface 15b of its corresponding one of the current collectors 15, thereby covering the peripheral portion 15c.

That is, each of the sealing materials 21 has inner portions 21a that overlap with the first surface 15a and the second surface 15b, respectively, of its corresponding one of the current collectors 15, and an outer portion 21b that is located outward with respect to an edge of its corresponding one of the current collectors 15, as viewed in the Z direction. Portions of the sealing materials 21 adjacent to each other and forming a pair with one of the current collectors 15 interposed therebetween are joined to each other at the outer portions 21b. The inner portions 21a of each of the sealing materials 21 may be welded to the first surface 15a and the second surface 15b, respectively, of its corresponding one of the current collectors 15. In the present embodiment, the sealing materials 21 each are welded to both the first surface 15a and the second surface 15b of its corresponding one of the current collectors 15.

In the present embodiment, the sealing materials provided for the current collectors 15 of the bipolar electrodes 11, the current collector 15 of the positive terminal electrode 12, the current collector 15 of the negative terminal electrode 13 are designated by the same reference numeral as the sealing materials 21, but the sealing materials provided for the current collectors 15 of the bipolar electrodes 11, the sealing material provided for the current collector 15 of the positive terminal electrode 12, and the sealing material provided for the current collector 15 of the negative terminal electrode 13 may be the same or different from each other.

The spacers 22 are disposed so as to be interposed between the sealing materials 21 adjacent to each other in the Z direction. As a result, the spacers 22 and pairs of sealing materials 21 adjacent to each other in the Z direction cooperate to maintain spaces between the current collectors 15 adjacent to each other in the Z-direction. The internal spaces S each are defined by the current collectors 15 adjacent to each other and forming a pair in the Z direction, one of the spacers 22, and the sealing materials 21 adjacent to the spacer 22 and forming a pair. In this way, each of the spacers 22 cooperates with the sealing materials 21 adjacent to each other in the Z direction to form the internal space S between the current collectors 15 adjacent to each other in the Z direction.

The spacers 22 each have a frame shape (a rectangular frame shape in the present embodiment) that extends along the outer shapes of the current collectors 15 as viewed in the Z direction, and are disposed on the peripheral portions 15c of the current collectors 15 as viewed in the Z direction. That is, the spacers 22 each have an inner portion 22a that overlaps the current collectors 15 and an outer portion 22b that is located outward with respect to the outer edges 15e of the current collectors 15 as viewed in the Z direction. The outer portions 22b of the spacers 22 do not overlap with the current collectors 15 as viewed in the Z direction. The inner portion 22a and the outer portion 22b each have a frame shape (a rectangular frame shape in the present embodiment) as viewed in the Z direction.

Each of the separators 14 is interposed between the positive electrode active material layer 16 and the negative electrode active material layer 17 adjacent to each other along the Z direction, and extends so as to be sandwiched between one of the sealing materials 21 and one of the spacers 22 adjacent to each other along the Z direction. Outer ends of the separators 14 may be held while being sandwiched between the sealing materials 21 and the spacers 22. In the present embodiment, the separators 14 are fixed to the sealing materials 21 with the outer ends of the separators 14 welded to the sealing materials 21, and are not joined to the spacers 22 by welding or the like.

Parts of the portions of the sealing materials 21 located outward with respect to the outer edges 15e of the current collectors 15 (i.e., the ends of the outer portions 21b) and parts of the spacers 22 located outward with respect to the outer edges 15e of the current collectors 15 (i.e., the ends of the outer portion 22b) are welded to each other and integrated to form a welded portion 23. That is, the sealing body 20 has the welded portion 23 that is formed by welding and integrating the outer portions 21b of the sealing materials 21 and the outer portions 22b of the spacers 22. The welded portion 23 has a frame shape surrounding the electrode stack 10 and forms an outer peripheral portion of the sealing body 20 as viewed in Z direction. Therefore, outer side surfaces of the welded portion 23 form outer side surfaces of the sealing body 20. That is, in the present embodiment, the sealing body 20 has four outer surfaces extending along the Z direction. The spacers 22 do not have to be welded to the sealing materials 21 at least in the inner portions 21a of the sealing materials 21 adjacent thereto in the Z direction. The corners of the welded portion 23 may include a chamfered portion by performing chamfering such as light chamfering, C chamfering, and R chamfering.

In addition, conductive members (not illustrated) are stacked on the first surface 15a of the current collector 15 of the positive terminal electrode 12 and the second surface 15b of the current collector 15 of the negative terminal electrode 13, respectively, in portions exposed from the sealing body 20 (i.e., the portions where the sealing materials 21 are not provided as viewed in the Z direction). The conductive members are electrically connected to the current collector 15 of the positive terminal electrode 12 and the current collector 15 of the negative terminal electrode 13, respectively. The conductive members each are interposed between the power storage modules 1 disposed adjacent to each other, and function as terminals for extracting current from the power storage modules 1. The conductive members can be used to electrically connect the power storage modules 1. The power storage modules 1 may be arranged in series via the conductive members.

The conductive members may also be used as a member for applying a restraining load to the electrode stack 10. That is, when a restraining member (not illustrated) for restraining the power storage modules 1 in the Z direction is provided, a restraining load may be applied to the electrode stack 10 through the conductive members. Furthermore, a cooling passage may be formed in the conductive members. The power storage modules 1 may be cooled by circulating a cooling medium through the cooling passage formed in the conductive members. Furthermore, members (not illustrated) that are provided integrally with or separately from the conductive members may be disposed on opposite sides of the sealing body 20 in the Z direction, and a restraining load may be applied to the sealing body 20 through these members.

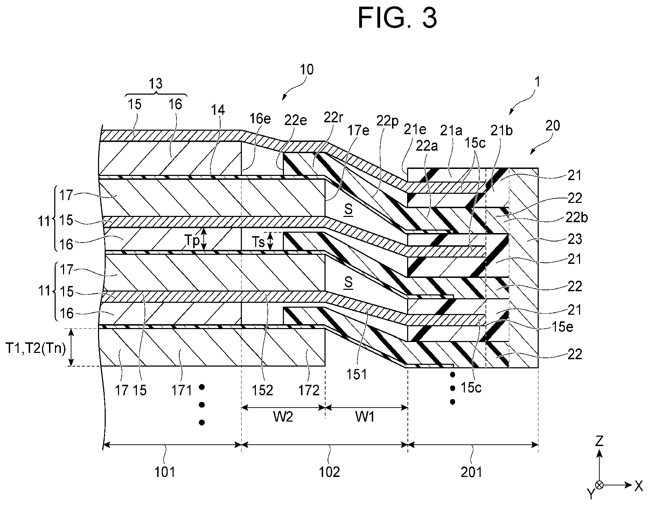

FIG. 3 is a partially enlarged schematic cross-sectional view of the power storage module illustrated in FIG. 1. In FIGS. 1 and 3, the separators 14 each are provided between a surface of one of the spacers 22 on the negative electrode active material layer 17 side and one of the sealing materials 21 facing such a surface.

As illustrated in FIGS. 1 to 3, an inner edge 22e (i.e., part of the inner portion 22a) of each of the spacers 22 is located between the outer edge 17e of the negative electrode active material layer 17 and the outer edge 16e of the positive electrode active material layer 16, as viewed in the Z direction. Thus, the spacers 22 each include an overlapping portion 22r that overlaps with the negative electrode active material layer 17 as viewed in the Z direction, and a non-overlapping portion 22p that does not overlap with the sealing materials 21 and the negative electrode active material layer 17 as viewed in the Z direction.

Among the plurality of spacers 22, one of the spacers 22 located outermost in the Z direction (here, one of the spacers 22 on the positive terminal electrode 12 side) may be held at the overlapping portion 22r between the negative electrode active material layers 17 disposed adjacent to each other and forming a pair in the Z direction with one of the separators 14 interposed therebetween. More specifically, the overlapping portion 22r of the one of the spacers 22 located outermost in the Z direction may be in contact with the first surface 15a of one of the current collectors 15 and one of the separators 14 facing such a first surface 15a. In this case, the one of the spacers 22 located outermost in the Z direction may be joined (for example, welded) to the first surface 15a of the one of the current collectors 15 at the overlapping portion 22r.

Here, in the present embodiment, among the plurality of spacers 22, the spacers 22 other than the spacers 22 located outermost in the Z direction (the intermediate spacers 22) are not in contact with the current collectors 15 of the bipolar electrodes 11 at the overlapping portions 22r. That is, a thickness Ts of each of the spacers 22 in the Z direction is smaller than a thickness Tp of the positive electrode active material layer 16 in the Z direction. In other words, the internal spaces S exist between the intermediate spacers 22 and the first surfaces 15a of the current collectors 15 of the adjacent bipolar electrodes. In the present embodiment, the thickness Ts of the overlapping portion 22r of each of the spacers 22 may be equal to the thickness of the portion of each of the spacers 22 that overlaps with the sealing materials 21 as viewed in the Z direction.

The negative electrode active material layer 17 has a first portion 171 that has a rectangular shape and overlaps with the positive electrode active material layer 16 as viewed in the Z direction, and a second portion 172 that is located outward with respect to the outer edge 16e of the positive electrode active material layer 16 as viewed in the Z direction, has a frame shape (a rectangular frame shape in the present embodiment), and includes the outer edge 17e of the negative electrode active material layer 17. The thickness Tn of the negative electrode active material layer 17 in the Z direction may be uniform between the first portion 171 and the second portion 172, or may be different. In the present embodiment, the thickness T1 of the first portion 171 in the Z direction and the thickness T2 of the second portion 172 in the Z direction are the same, but the thickness T2 of the second portion 172 may be larger than the thickness T1 of the first portion 171 by fitting the positive electrode active material layer 16 into the negative electrode active material layer 17.

The current collectors 15 each have a first region 151 (an uncoated portion where no active material layer is formed) that does not overlap with the negative electrode active material layer 17 or the sealing material 21 as viewed in the Z direction, and a second region 152 that overlaps with the negative electrode active material layer 17 and does not overlap with the positive electrode active material layer 16 as viewed in the Z direction. The first region 151 is a region between the outer edge 17e of the negative electrode active material layer 17 and the inner edge 21e of the sealing material 21. That is, the first region 151 coincides with the non-overlapping portions 22p of the spacers 22 as viewed in the Z direction.

The second region 152 is a region between the outer edge 16e of the positive electrode active material layer 16 and the outer edge 17e of the negative electrode active material layer 17. In the present embodiment, a width W1 of the first region 151 as viewed in the Z direction is smaller than a width W2 of the second region 152 as viewed in the Z direction. Since the spacers 22 include the overlapping portions 22r as described above, the spacers 22 each are disposed between the current collectors 15 adjacent to each other in the Z direction in the first region 151.

Furthermore, the electrode stack 10 includes a first stacked portion 101 in which the negative electrode active material layer 17 and the positive electrode active material layer 16 overlap with each other as viewed in the Z direction, and a second stacked portion 102 including a portion in which the negative electrode active material layer 17 and the spacers 22 (overlapping portions 22r) overlap with each other as viewed in the Z direction. The second stacked portion 102 corresponds to a region of the first region 151 and the second region 152 combined, as viewed in the Z direction. The sealing body 20 includes a first sealing portion 201 where the sealing materials 21 and the spacers 22 overlap with each other as viewed in the Z direction. The first sealing portion 201 does not overlap with the overlapping portions 22r and the non-overlapping portion 22p of the spacers 22 as viewed in the Z direction. In the present embodiment, the thickness in the Z direction is smaller in the order of the first stacked portion 101, the second stacked portion 102, and the first sealing portion 201. That is, the thickness of the second stacked portion 102 in the Z direction is smaller than the thickness of the first stacked portion 101 in the Z direction, and the thickness of the first sealing portion 201 in the Z direction is smaller than the thickness of the second stacked portion 102 in the Z direction.

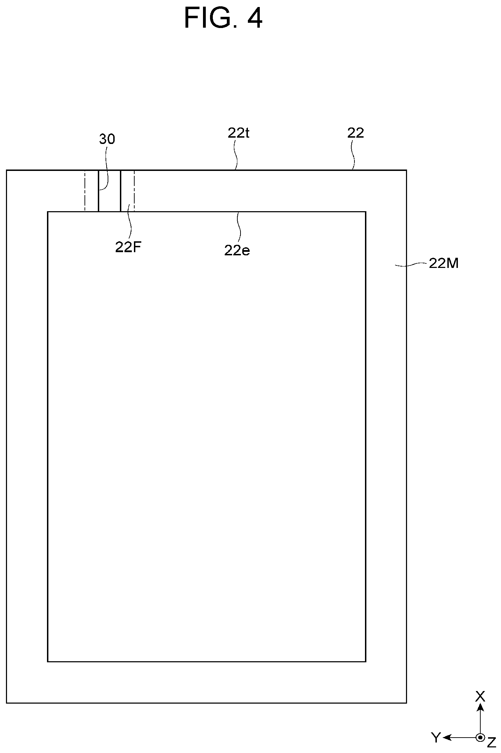

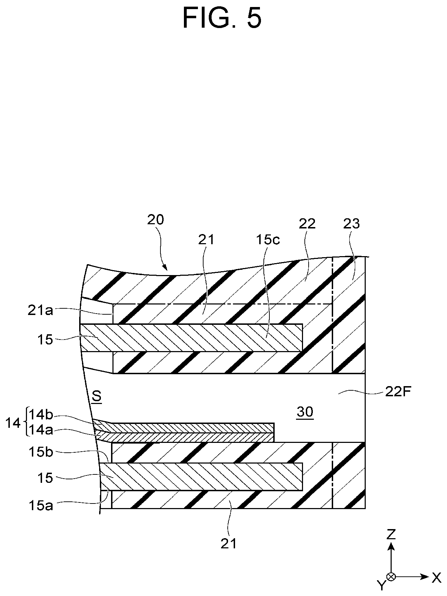

FIG. 4 is a plan view of a spacer illustrated in FIGS. 1 and 3, and FIG. 5 is a partially enlarged schematic cross-sectional view illustrating the power storage module. As illustrated in FIGS. 1, 2, 4, and 5, the sealing body 20 has a plurality of communication holes 30 connecting the internal spaces S to the outside, respectively. The communication holes 30 allow the internal spaces S to be in communication with the outside, respectively. Thus, the communication holes 30 can be used for introducing and discharging fluid into and from the internal spaces S. That is, the communication holes 30 can be used when an electrolytic solution is injected into the internal spaces S, or when a test gas is introduced and discharged into or from the internal spaces S. For example, after the injection of the electrolytic solution and the introduction and discharge of the test gas are completed, the communication holes 30 can be sealed with a film or the like including a metal layer with another resin member formed on the outside of the sealing body 20 interposed therebetween.

In the present embodiment, the communication holes 30 are formed by cutting out a part of each of the spacers 22 . That is, each of the spacers 22 includes a main body portion 22M that is formed in a frame shape (rectangular frame shape) extending along the outer shape of its corresponding one of the current collectors 15 as viewed in the Z direction, and a communication hole forming portion 22F, which is formed by cutting out a portion of each of the spacers 22 from the outer edge 22t to the inner edge 22e as viewed in the Z direction to form the communication hole 30. As viewed in the Z direction, the communication holes 30 are formed at a plurality of positions at one side of the sealing body 20. Thus, the communication hole forming portions 22F are also distributed at a plurality of positions on the one side of the sealing body 20 in the same manner. That is, the communication hole forming portions 22F of the spacers 22 adjacent to each other in the Z direction are formed at different positions as viewed in the Z direction.

As described above, each of the separators 14 is interposed between the positive electrode active material layer 16 and the negative electrode active material layer 17 adjacent to each other along the Z direction, and extends so as to be sandwiched between one of the sealing materials 21 and one of the spacers 22 adjacent to each other along the Z direction. As a result, each of the separators 14 divides its corresponding one of the internal spaces S between the current collectors 15 adjacent to each other in the Z direction into a positive electrode-side space in which the positive electrode active material layer 16 is disposed and a negative electrode-side space in which the negative electrode active material layer 17 is disposed. In a portion of the electrode stack 10 that overlaps with the main body portions 22M of the spacers 22 as viewed in the Z direction, the spacers 22 (main body portions 22M), in addition to the separators 14, are interposed between the current collectors 15 adjacent to each other in the Z direction.

On the other hand, in a portion of the electrode stack 10 that overlaps with the communication hole forming portions 22F of the spacers 22 as viewed in the Z direction, since portions of the spacers 22 are cut out, only the separators 14 are interposed between the current collectors 15 adjacent to each other in the Z direction. Therefore, for example, if foreign matter is present in the negative electrode-side space and such foreign matter penetrates any of the separators 14, short circuits may occur between the current collectors 15 adjacent to each other with the associated one of the separators 14 interposed therebetween. Although various types of foreign matter may be assumed, it is considered that one example is precipitate that is generated when metallic foreign substances dissolved by the electrolytic solution in the positive electrode-side space are reprecipitated in the negative electrode-side space.

In this regard, in the present embodiment, the separators 14 each include a substrate 14a and a ceramic layer 14b formed on the substrate 14a at least in a portion that overlaps with the communication hole forming portions 22F as viewed in the Z direction. The substrate 14a corresponds to a conventional separator made of the above-mentioned various materials, and has a thickness of, for example, about 10 µm. The ceramic layer 14b has a thickness of, for example, 2 µm or more (as an example, a thickness of about 4 µm). In the present embodiment, the ceramic layer 14b is provided on the entire surface of the substrate 14a. The ceramic layer 14b is formed on a side of the substrate 14a adjacent to the spacer 22, of the sealing material 21 and the spacer 22 that sandwich the separator 14 therebetween.

As described above, in the power storage module 1 according to the present embodiment, the sealing body 20 is provided in the electrode stack 10, so that the internal spaces S for accommodating an electrolytic solution are formed between the current collectors 15 of the electrodes adjacent to each other. The separators 14 each are interposed between the positive electrode active material layer 16 and the negative electrode active material layer 17 of the electrodes adjacent to each other. More specifically, each of the separators is interposed between the positive electrode active material layer 16 and the negative electrode active material layer 17, and extends so as to be sandwiched between one of the sealing materials 21 forming the sealing body 20 and one of the spacers 22 adjacent to the one of the sealing materials 21. Accordingly, each of the separators 14 may divide the internal space S into the positive electrode-side space (first space) on the positive electrode active material layer 16 side and the negative electrode-side space (second space) on the negative electrode active material layer 17 side.

On the other hand, in the power storage module 1 according to the present embodiment, the spacers 22 each have the main body portion 22M having a frame shape that extends along the outer shape of the current collectors 15 as viewed in a stacking direction (Z direction), and the inner edge of the main body portion 22M is located inward with respect to the outer edges 17e of the negative electrode active material layers 17, which protrude outward with respect to the positive electrode active material layers 16. In other words, the main body portion 22M of each of the spacers 22 extends from between the sealing materials 21 adjacent to each other so as to overlap with the negative electrode active material layer 17. Accordingly, between the uncoated portions (first region 151 in which no active material layer is formed) of the current collectors 15 adjacent to each other with the separators 14 interposed therebetween, the main body portions 22M of the spacers 22, in addition to the separators 14 are interposed as viewed in the Z direction. This configuration suppresses short circuits caused by foreign matter existing in the negative electrode-side spaces of the internal spaces S, for example.

Here, the spacers 22 include the communication hole forming portions 22F where the spacers 22 are cut out from the outer edge 22t to the inner edge 22e as viewed in the Z direction to form the communication holes 30, in addition to the main body portions 22M. Since these communication hole forming portions 22F are provided in the spacers 22, regions where the spacers 22 are not present can be created between the uncoated portions (first regions 151) where no active material layer is formed in the current collectors 15 adjacent each other with its corresponding one of the separators 14 interposed therebetween. Therefore, in these regions, the spacers 22 are less likely to contribute to prevention of short circuits between the uncoated portions, which are caused by foreign matter.

In this regard, in the power storage module 1 of the present embodiment, the separators 14 each include the substrate 14a and the ceramic layer 14b formed on the substrate 14a at least in the portion that overlaps with the communication hole forming portion 22F (i.e., a portion where the spacer is cut out) as viewed in the Z direction, and rigidity is secured as compared to a case where only the substrate 14a is used (i.e., a conventional separator). Therefore, even in the above-mentioned region where no spacer 22 is disposed, foreign matter is prevented from penetrating the separator 14, and as a result, short circuits between the uncoated portions of current collectors 15 adjacent to each other are prevented. As described above, the power storage module 1 according to the present embodiment can suppress short circuits.

Here, the separators 14 each are sandwiched between the sealing material 21 provided on its corresponding one of the current collectors 15 and one of the spacers 22 stacked on the sealing material 21. Therefore, for example, when the sealing materials 21 and the spacers 22 are welded (e.g., in forming the welding portion 23), heat input to the sealing materials 21 is quickly lost by being conducted through the current collectors 15 and is not easily transmitted to the separators 14, whereas heat input to the spacers 22 is easily transmitted to the separators 14, which may cause deterioration of the separator 14.

In this regard, in each of the separators 14 of the power storage module 1 according to the present embodiment, the ceramic layer 14b is formed on a side of the substrate 14a adjacent to the spacer 22, of the sealing material 21 and the spacer 22 that sandwich the separator 14 therebetween. This makes it difficult for the heat input to the spacers 22 to be transmitted to the substrate 14a, thereby suppressing deterioration of the separators 14. With this configuration, even in a case where the separators 14 and the spacers 22 slide against each other when the spacers 22 expand and contract due to heat generated during charging and discharging, for example, the ceramic layer 14b suppresses wear (or damage) of the separators 14.

In the power storage module 1 according to the present embodiment, the ceramic layer 14b has a thickness of 2 µm or more. Therefore, it is possible to more reliably prevent short circuits.

Furthermore, in the power storage module 1 according to the present embodiment, the electrolytic solution may contain LiFSI as an electrolytic salt. In this way, an electrolytic solution containing LiFSI (lithium bisfluorosulfonylimide) is likely to dissolve metallic foreign matter in the positive electrode-side space, out of the positive electrode-side space and the negative electrode-side space, so that it is likely to produce precipitate in the negative electrode-side space, out of the positive electrode-side space and the negative electrode-side space. Therefore, it is more effective to suppress short circuits as described above.

The above embodiment describes one aspect of the present invention. Thus, the present invention is not limited to the above-described embodiment and may be modified as desired. Next, a modified example will be described.

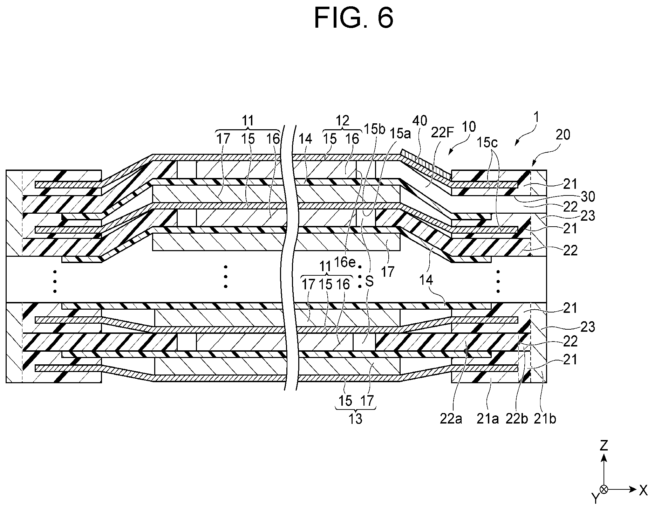

FIG. 6 is a schematic cross-sectional view, illustrating a power storage module according to a modified example. As illustrated in FIG. 6, in the power storage module 1, a reinforcing portion 40 is provided (for example, by adhesion or welding) on the current collector 15 of the positive terminal electrode 12, which is one of the electrodes located at the outermost position of the electrode stack 10 in the Z direction. The reinforcing portion 40 is formed in a plate shape made of a metal such as aluminum, for example. The reinforcing portion 40 is provided on the second surface 15b of the current collector 15 of the positive terminal electrode 12 facing outward in the Z direction. The reinforcing portion 40 is disposed in at least a portion of the current collector 15 of the positive terminal electrode 12 between the outer edge 16e of the positive electrode active material layer 16 and the inner edge 21e of the sealing material 21 as viewed in the Z direction.

It is noted that the reinforcing portion 40 may be provided on the entire second surface 15b of the current collector 15 of the positive terminal electrode 12 (except for the portion covered by the sealing material 21), or may have a rectangular frame shape as viewed in the Z direction. Furthermore, the reinforcing portion 40 may be further provided on the first surface 15a facing the outside of the current collector 15 of the negative terminal electrode 13, which is the other one of the electrodes located at the outermost position of the electrode stack 10 in the Z direction.

According to this modified example, the reinforcing portion 40 is formed at least in the uncoated portion of the current collector 15 of the positive terminal electrode 12, thereby ensuring rigidity. As a result, for example, when the internal space S is decompressed, the current collector 15 of the positive terminal electrode 12 is prevented from bending inward in the Z direction and reducing the distance between the current collector 15 and another current collector 15 (i.e., the distance between the current collectors 15 is maintained). As a result, short circuits between the current collectors 15 are more reliably prevented, and fluid flow passages in the internal spaces S (that is, the ability to allow gas and an electrolytic solution to escape) are reliably ensured.

It is noted that, in the illustrated example, a case where the reinforcing portion 40, which is a part provided separately from the current collector 15, is provided for the current collector 15 is illustrated. However, the reinforcing portion 40 may be formed integrally with the current collector 15. In this case, the thickness of the current collector 15 of the positive terminal electrode 12 (and the negative terminal electrode 13) is made larger than the thickness of the current collector 15 of each of the other electrodes (i.e., the bipolar electrodes 11), thereby forming the reinforcing portion 40 integrally.

Here, in the above-described embodiment, the example of the case in which the width W1 of the first region 151 of the current collector 15 as viewed in the Z direction is smaller than a width W2 of the second region 152 of the current collector 15 as viewed in the Z direction has been described. However, the width W1 of the first region 151 as viewed in the Z direction and the width W2 of the second region 152 as viewed in the Z direction may be the same, or the width W1 of the first region 151 as viewed in the Z direction may be larger than the width W2 of the second region 152 as viewed in the Z direction.

In addition, in the above embodiment, an example of a case in which the overlapping portion 22r of the spacer 22 located outermost in the Z direction is in contact with the current collector 15 of the positive terminal electrode 12 has been described, but the overlapping portion 22r of the spacer 22 does not have to be in contact with the current collector 15 of the positive terminal electrode 12.

The following will describe additional notes regarding the above-described embodiment.
[1] A power storage module comprising:
   an electrode stack including a plurality of electrodes stacked along a first direction;
   a sealing body provided in the electrode stack and sealing the electrode stack; and
   a separator interposed between the electrodes adjacent to each other along the first direction, wherein
   the electrodes each includes:
      a current collector having a first surface intersecting with the first direction, and a second surface opposite from the first surface;
      a first active material layer provided on the first surface; and
      a second active material layer provided on the second surface and having a polarity different from a polarity of the first active material layer,
   the sealing body includes:
      a plurality of sealing materials that is stacked along the first direction, each of the sealing materials having a frame shape extending along an outer shape of the current collector along the first direction, being joined to the first surface and the second surface at a peripheral edge of the current collector;
      a plurality of spacers that is interposed between the sealing materials adjacent to each other along the first direction, the spacers cooperating with the sealing materials adjacent to each other along the first direction to form internal spaces configured to accommodate an electrolytic solution between the current collectors adjacent to each other; and
      a plurality of communication holes providing communication between a plurality of the internal spaces and an outside,
   an outer edge of the second active material layer is positioned outward with respect to an outer edge of the first active material layer as viewed in the first direction,
   the spacers each include:
      a main body portion having a frame shape that extends along the outer shape of the current collector as viewed in the first direction; and
      a communication hole forming portion that is cut out from an outer edge to an inner edge of each of the spacers as viewed in the first direction to form a corresponding one of the communication holes,
   an inner edge of the main body portion is located inward with respect to the outer edge of the second active material layer as viewed in the first direction,
   the separator is interposed between the first active material layer and the second active material layer adjacent to each other along the first direction, and extends so as to be sandwiched between a corresponding one of the sealing materials and a corresponding one of the spacers adjacent to each other along the first direction, and
   the separator includes a substrate and a ceramic layer formed on the substrate at least in a portion of the separator that overlaps with the communication hole forming portion as viewed in the first direction.
[2] The power storage module according to [1], wherein the ceramic layer is formed on the substrate on a side of a corresponding one of the spacers among a corresponding one of the sealing materials and the corresponding one of the spacers that sandwich the separator.
[3] The power storage module according to [1] or [2], wherein a thickness of the ceramic layer is 2 µm or more.
[4] The power storage module according to any one of [1] to [3], wherein the electrolytic solution contains LiFSI as an electrolytic salt.
[5] The power storage module according to any one of [1] to [4], wherein a reinforcing portion is provided in one of the current collectors corresponding to a terminal electrode that is one of the electrodes located at an outermost position of the electrode stack in the first direction, and
   the reinforcing portion is disposed in at least a portion of the current collector of the terminal electrode between the outer edge of the first active material layer and an inner edge of a corresponding one of the sealing materials as viewed in the first direction.

### Reference Signs List

- 1: power storage module
- 10: electrode stack
- 11: bipolar electrode (electrode)
- 12: positive terminal electrode (terminal electrode)
- 13: negative terminal electrode (terminal electrode)
- 14: separator
- 14a: substrate
- 14b: ceramic layer
- 15: current collector
- 15a: first surface
- 15b: second surface
- 16: positive electrode active material layer (first active material layer)
- 16e: outer edge
- 17: negative electrode active material layer (second active material layer)
- 17e: outer edge
- 20: sealing body
- 21: sealing material
- 22: spacer
- 22t: outer edge
- 22e: inner edge
- 22M: main body portion
- 22F: communication hole forming portion
- 30: communication hole
- 40: reinforcing portion
- S: internal space

## Claims

1. A power storage module comprising:
an electrode stack including a plurality of electrodes stacked along a first direction;
a sealing body provided in the electrode stack and sealing the electrode stack; and
a separator interposed between the electrodes adjacent to each other along the first direction, wherein
the electrodes each includes:
a current collector having a first surface intersecting with the first direction, and a second surface opposite from the first surface;
a first active material layer provided on the first surface; and
a second active material layer provided on the second surface and having a polarity different from a polarity of the first active material layer,
the sealing body includes:
a plurality of sealing materials that is stacked along the first direction, each of the sealing materials having a frame shape extending along an outer shape of the current collector along the first direction, being joined to the first surface and the second surface at a peripheral edge of the current collector;
a plurality of spacers that is interposed between the sealing materials adjacent to each other along the first direction, the spacers cooperating with the sealing materials adjacent to each other along the first direction to form internal spaces configured to accommodate an electrolytic solution between the current collectors adjacent to each other; and
a plurality of communication holes providing communication between a plurality of the internal spaces and an outside,
an outer edge of the second active material layer is positioned outward with respect to an outer edge of the first active material layer as viewed in the first direction,
the spacers each include:
a main body portion having a frame shape that extends along the outer shape of the current collector as viewed in the first direction; and
a communication hole forming portion that is cut out from an outer edge to an inner edge of each of the spacers as viewed in the first direction to form a corresponding one of the communication holes,
an inner edge of the main body portion is located inward with respect to the outer edge of the second active material layer as viewed in the first direction,
the separator is interposed between the first active material layer and the second active material layer adjacent to each other along the first direction, and extends so as to be sandwiched between a corresponding one of the sealing materials and a corresponding one of the spacers adjacent to each other along the first direction, and
the separator includes a substrate and a ceramic layer formed on the substrate at least in a portion of the separator that overlaps with the communication hole forming portion as viewed in the first direction.

2. The power storage module according to claim 1, wherein the ceramic layer is formed on the substrate on a side of a corresponding one of the spacers among a corresponding one of the sealing materials and the corresponding one of the spacers that sandwich the separator.

3. The power storage module according to claim 1, wherein a thickness of the ceramic layer is 2 µm or more.

4. The power storage module according to claim 1, wherein the electrolytic solution contains LiFSI as an electrolytic salt.

5. The power storage module according to any one of claims 1 to 4, wherein a reinforcing portion is provided in one of the current collectors corresponding to a terminal electrode that is one of the electrodes located at an outermost position of the electrode stack in the first direction, and
the reinforcing portion is disposed in at least a portion of the current collector of the terminal electrode between the outer edge of the first active material layer and an inner edge of a corresponding one of the sealing materials as viewed in the first direction.
